# EUROPÄISCHE PATENTSCHRIFT

(11) **EP 2 370 804 B1**
(45) Veröffentlichungstag und Bekanntmachung des Hinweises auf die Patenterteilung: **05.02.2020**
(21) Anmeldenummer: 09796950.5
(22) Anmeldetag: 10.12.2009
(51) Int. Cl.: G01N 17/00, G01N 25/18

(54) **VORRICHTUNG UND VERFAHREN ZUR DETEKTION VON BELÄGEN**
DEVICE AND METHOD FOR DETECTING DEPOSITS
DISPOSITIF ET PROCÉDÉ DE DÉTECTION DE DÉPÔTS

(30) Priorität: 22.12.2008 DE 102008064038
(43) Veröffentlichungstag der Anmeldung: 05.10.2011
(73) Patentinhaber: KSB SE & Co. KGaA, 67227 Frankenthal (DE)
(72) Erfinder: BOSBACH, Franz, 67227 Frankenthal (DE); HANEWALD, Dieter, 67227 Frankenthal (DE); HELLMANN, Dieter-Heinz, 67227 Frankenthal (DE); STECKER, Ulrich, 68163 Mannheim (DE); URSCHEL, Sven, 67281 Kircheim an der Weinstrasse (DE)
(86) Internationale Anmeldenummer: PCT/EP2009/008815
(87) Internationale Veröffentlichungsnummer: WO 2010/072334

(56) Entgegenhaltungen:
- WO-A1-02/04290
- WO-A1-2009/135504
- DE-B3-102005 038 870
- FR-A1- 2 897 930
- US-A- 4 718 774
- US-A- 5 248 198
- US-B1- 6 328 467

## Beschreibung

Die Erfindung betrifft eine Vorrichtung mit einem Sensor zur Detektion von Belägen sowie ein Verfahren zur Detektion von Belägen auf Mantelinnenflächen von Wänden von Anlagenteilen, die von einem Medium, aus dem sich die Beläge niederschlagen, bedeckt sind.

Aus der US 4,718,744 ist ein System und ein Verfahren zur Bestimmung des Belagansatzes in einer Erdöl fördernden Rohrleitung bekannt. Eine Versorgungsquelle liefert elektrische Energie zu einem Heizelement in einem Gehäuse eines Belagsensors. Das Gehäuse umfasst einen Sensor zum Ermitteln der Temperatur des Erdöls und zur Generierung eines entsprechenden elektrischen Signals. Das Gehäuse mit Heizelement und Sensor ist derart in der Rohrleitung angeordnet, dass eine Wärmeübertragung zu und von dem Erdöl stattfindet und die Wärmeübertragung beeinträchtigt wird, wenn ein Belag beginnt das Gehäuse des Belagsensors zu bedecken. Als unvorteilhaft hat sich dabei herausgestellt, dass sich das Gehäuse des Belagsensors von der Rohrwand radial in das Innere der Rohrleitung erstreckt. Dies kann bei mit Feststoffen belasteten Fördergut dazu führen, dass das Gehäuse des Belagsensors beschädigt oder abgerissen werden kann.

In der FR 2 897 930 A1 wird ein Plattenwärmetauscher mit einer Vielzahl von gestapelten Platten behandelt, der eine Vorrichtung umfasst, die das Ausmaß der Beläge in den Fluidkreisläufen auswertet, wobei die Auswerteeinrichtung einen elektrischen Widerstand umfasst, der mit einer Platte am Ende des Stapels thermisch verbunden ist. Der Plattenwärmetauscher umfasst ferner Messmittel, zur Messung der Temperatur in der unmittelbaren Umgebung des Widerstands. Der Widerstand ist dabei zwischen einer Isolierschicht und einer Platte angeordnet.

Die WO 02/04290 A1 offenbart ein Detektionssystem zur Detektion einer Grenzschicht auf einer Oberfläche, mit einer Wärmequelle zum lokalen Erhitzen der Oberfläche, einem Sensor zur Messung mindestens einer Temperaturcharakteristik der Oberfläche, die auf die Temperaturänderung bezogen ist, die als Folge der lokalen Erwärmung über der Oberfläche auftritt, Speichermittel zum leicht zugänglichen Speichern eines Satzes von zugehörigen Daten, die mindestens eine Temperaturcharakteristik und zumindest ein Merkmal der Grenzschicht betreffen, und Vergleichsmittel zum Vergleichen der Temperaturcharakteristik und der Grenzschichtcharakteristik, sowie zum Bestimmen der Grenzschichtcharakteristik auf der Basis der gemessenen Temperaturcharakteristik

Die DE 10 2005 038870 B3 beschreibt eine Vorrichtung und ein Verfahren zur Durchführung zur Detektion eines Belages in Rohrleitungen und Kanälen, wobei in zwei gegenüber befindlichen Öffnungen unterschiedlicher Bemessung in der Mantelfläche der Rohrleitung jeweils ein Metallplättchen passgerecht zu der jeweiligen Öffnung und zur Rohrleitungswandung elektrisch und thermisch isoliert angeordnet ist. die Innenseiten der Metallplättchen fluchten zur Vermeidung von Turbulenzen in der Rohrleitung mit der Innenseite der Rohrleitungswandung, wobei an den Außenseiten der Metallplättchen je ein Widerstandsthermometer befestigt ist und die Außenseiten der Metallplättchen mit den Widerstandsthermometern thermisch isoliert sind. Die Widerstandsthermometer sind jeweils über elektrische Leitungen mit einer elektrischen Spannung beaufschlagt, wobei die Widerstandsthermometer über einem Operationsverstärker und dessen analogen Ausgang und über einen Analog/DigitalWandler mit einem Mikroprozessor so elektrisch zusammen geschaltet sind, dass die Differenz der Spannung an dem auf dem kleineren Metallplättchen befindlichen Widerstandsthermometer und an dem auf dem größeren Metallplättchen befindlichen Widerstandsthermometer messbar ist und wobei der Operationsverstärker über einen Analog/Digitalwandler und einen Mikroprozessor mit einem optischen und/oder akustischen Anzeigegerät und/oder einem Aufzeichnungsgerät verbunden ist.

Die Bildung von Belägen auf den Wänden von Anlagenteilen ist in vielen Fällen ein ernsthaftes wirtschaftliches und technisches Problem. Beispielsweise können sich in Belägen Keime bilden, welche die Produktqualität verschlechtern. Auch können Beläge zur Beeinflussung der Strömungscharakteristik bei Armaturen führen. Bei Rohrleitungen bewirken Beläge einen Anstieg des Druckverlustes und können bei kleinen Innendurchmessern sogar zu Verstopfungen führen. Je nach Art des Belages ist auch eine Schädigung des Werkstoffs möglich, aus dem die Wände gefertigt sind.

Die Wände, auf denen sich Beläge bilden, können aus unterschiedlichen Materialien, beispielsweise Edelstahl oder Kunststoff, gefertigt sein. Die Oberflächenstruktur der Wände beeinflusst die Belagbildung. Raue Oberflächen bieten eine bessere Angriffsfläche für Beläge als glatte Oberflächen. Die Wände, auf denen sich Beläge bilden, können eben oder gewölbt sein. Technisch relevant sind insbesondere Innenwände vom Armaturen, Pumpen, Rohrleitungen oder Behältern.

Die Medien, mit denen die Wände bedeckt sind und aus denen sich die Beläge niederschlagen, können flüssig oder gasförmig sein. Auch ist es denkbar, dass pastenartige Stoffe die Wände bedecken. Die Erfindung kommt vorzugsweise bei Flüssigkeiten zum Einsatz, wobei sich die Anwendung der Erfindung insbesondere bei wässrigen Lösungen eignet.

Bei den Belägen kann es sich entweder um anorganische oder organische Stoffe handeln. Wichtige Beispiele für anorganische Beläge sind Carbonate, Oxide oder Hydroxide, die sich als Kesselstein, Rost oder Verockerung auf den Wänden von Anlagenteilen niederschlagen.

Die wichtigsten organischen Beläge sind Biofilme. Im Bereich der Hygienetechnik, beispielsweise der Herstellung von Lebensmittel, Pharmazeutika oder der Biotechnologie, stellt die Bildung von Biofilmen ein bedeutendes Problem dar. Der Bewuchs wird durch Biomasse und durch Verunreinigungen, die in der Biomasse eingeschlossen sind, verursacht. Bakterien, Pilze, Hefen, Kieselalgen und Einzeller sind nur einige Organismen, die den Aufbau von Biomasse verursachen. Wenn der durch diese Organismen verursachte Biobewuchs nicht kontrolliert wird, kann er Prozessvorgänge stören und die Produktqualität negativ beeinflussen. Bei der Herstellung von Lebensmitteln und pharmazeutischen Produkten müssen strenge Reinheitsgrade eingehalten werden. Eine Verunreinigung mit Bakterien bzw. Stoffwechselprodukten von Mikroorganismen kann zu gesundheitlichen Schäden führen.

Viele Prozesse in der Hygienetechnik werden diskontinuierlich als Batchprozesse betrieben. In gewissen Zeitabständen, die häufig auf Erfahrungswerten beruhen, wird der Produktionsprozess unterbrochen, um die Anlage von Belägen zu reinigen. Die Dauer des Reinigungsprozesses beruht ebenfalls häufig auf Erfahrungswerten. Um die Produktionsprozesse wirtschaftlich zu optimieren, sollten die Produktionsphasen so lange wie möglich und die Reinigungsphasen so kurz wie möglich betrieben werden. Dabei darf jedoch keine Verschlechterung der Produktqualität in Kauf genommen werden.

Aufgabe der vorliegenden Erfindung ist es, eine Vorrichtung und ein Verfahren zur Verfügung zu stellen, bei dem die Belagbildung auf den Innenwänden von Anlagenteilen kontinuierlich erfasst und quantitativ ausgewertet wird. Die Belagbildung soll erkannt und der Grad der Belagbildung bestimmt werden. Durch den Einsatz der Erfindung sollen Prozesse ökonomisch und ökologisch optimiert werden, indem die Produktionszeiten so lang wie möglich und die Reinigungsphasen nur so lang wie nötig andauern.

Diese Aufgabe wird erfindungsgemäß durch die Merkmale der Ansprüche 1 und 3 gelöst, wobei der Sensor zwei Bauteile umfasst, bei denen es sich um zwei temperaturabhängige Widerstände handelt, die stiftförmig ausgebildet sind, parallel nebeneinander und mit einem Abstand zueinander liegen und mit einer Spitze in das Medium ragen, wobei das erste Bauteil zur Messung der Temperatur des Mediums im Bereich dieses Bauteils und das zweite Bauteil zur Messung der Temperatur des Mediums an einer Stelle, die nicht vom Sensor aufgeheizt wird, dient, und als Referenzdaten Messdaten ohne Belagbildung herangezogen werden.

Der erfindungsgemäße Sensor kann sich aus mehreren Bauteilen zusammensetzen, die neben reinen Messfunktionen auch andere Aufgaben wahrnehmen. Der Sensor ist vorzugsweise als kompakte Einheit ausgebildet, in der die einzelnen Bauteile enthalten sind. Auf diese Weise ist der Sensor leicht zu handhaben und kann als Einheit in die Wände von Armaturen, Pumpen, Rohrleitungen oder Behältern integriert werden. Dabei hat es sich als günstig erwiesen, die Wand mit einer Bohrung zu versehen in die der Sensor passgenau eingefügt wird. Der Sensor ist vorzugsweise als zylinderförmige Einheit ausgebildet.

In der erfindungsgemäßen Ausführungsform fügt sich der Sensor bündig in die Mantelinnenfläche der Wand ein. Damit die mediumseitige Oberfläche des Sensors einen repräsentativen Ort für die Belagbildung darstellt kann diese aus dem gleichen Material wie die Wände des entsprechenden Anlagenteils gefertigt sein. Es ist auch denkbar, dass der Sensor eine Frühwarnfunktion für die Belagbildung übernehmen soll. Dann ist es günstig die mediumsseitige Oberfläche des Sensors aus einem Material zu formen, auf dem sich die Beläge bevorzugt bilden. Beispielsweise kann die Oberfläche des Sensors aufgeraut werden oder der Sensor kann zusätzlich mit einem netzartigen Material überzogen werden. Es kann sich als günstig erweisen, den Sensor an einem Schlechtpunkt der Anlage einzubauen, an dem es bevorzugt zu Belagbildung kommt.

Erfindungsgemäß erwärmt der Sensor das Medium lokal. Die Erwärmung erfolgt vorzugsweise in unmittelbarer Nähe zu der mediumseitigen Sensoroberfläche, da die Belagbildung unmittelbar an dieser Stelle erfasst werden soll. Fügt sich der Sensor bündig in die Mantelinnenflächen der Wand ein, so ist diese Stelle örtlich repräsentativ für die Belagbildung auf den Wänden.

Die Temperatur, die sich durch die Erwärmung an der lokalen Stelle des Mediums einstellt, wird ebenfalls vom Sensor erfasst. Der Sensor leitet seine Daten für den Aufheizvorgang und die Temperaturmessung an eine Auswerteeinheit weiter. Die Auswerteeinheit empfängt die Signale des Sensors und wandelt diese gegebenenfalls in Einheitssignale um. Zusätzlich versorgt die Auswerteeinheit den Sensor mit Energie. Als besonders günstig erweist es sich, wenn die Auswerteeinheit die Stromstärke erfasst mit der das Bauteil des Sensors erwärmt wird. Die Signale, die vom Sensor an die Auswerteeinheit weitergeleitet werden, können zur weiteren Verarbeitung auch digitalisiert werden. Als Auswerteeinheiten können Regler oder PCs eingesetzt werden.

Maßgeblich für eine Ermittlung der Belagbildung ist ein Vergleich der Messdaten mit Referenzdaten. In der Regel werden als Referenz Daten einer belagfreien Sensoroberfläche verwendet. Vorzugsweise entsprechen bei der Referenzmessung die Prozessbedingungen den Bedingungen, die bei der Durchführung der Messung der Belagbildung vorliegen.

Der Grad der Belagbildung kann beispielsweise über die Höhe der Belagschicht, die sich auf dem Sensor bildet angegeben werden. Denkbar ist auch, dass sich mit fortschreitender Deckschichtbildung die Struktur des Belags ändert und zunehmend kompakter wird. In diesem Falle wäre als physikalische Größe die Dichte der Belagschicht ein Maß für den Grad der Belagbildung.

Die Signale des Sensors werden ausgewertet, wobei über einen Algorithmus der Grad der Belagbildung bestimmt werden kann. Die Daten, die der Sensor zur Auswerteeinheit weiterleitet, fließen als Parameter in den Algorithmus ein. Beispielsweise können die Heizstärke, mit der das Medium erwärmt wird, die Temperatur, auf die sich das Medium bei einer bestimmten Heizstärke erwärmt, oder die Zeitspanne, die nötig ist, um bei einer vorgegebenen Heizstärke eine Temperatur zu erreichen als Größen im Algorithmus erhalten sein. Der Algorithmus stellt einen Zusammenhang zwischen den Sensordaten und dem Grad der Belagbildung her. Die einzelnen Parameter des Algorithmus können durch Regressionsrechnung ermittelt werden. Dabei werden die Koeffizienten der einzelnen Parameter des Algorithmus an die Messdaten angepasst. Ziel ist es, die Versuchsreihen durch mathematische Funktionen möglichst genau nachzubilden. Das Bestimmtheitsmaß kann für die Güte der Anpassung herangezogen werden.

Es hat sich als zweckmäßig erwiesen, zur Auswertung die Zeitspanne heranzuziehen, die benötigt wird bis ein konstantes Temperaturniveau erreicht wird. Bei dieser Variante bleibt die Heizstärke konstant. Beim Einsatz von Widerständen als aufheizendes Bauteil bedeutet dies, dass das Bauteil immer mit der gleichen Stromstärke beheizt wird, gleichgültig ob das Bauteil belagfrei ist oder sich ein Belag gebildet hat. Die Zeitspanne zur Einstellung eines Temperaturniveaus mit Belag unterscheidet sich von der Zeitspanne zur Einstellung eines Temperaturniveaus ohne Belag. Die Auswerteeinheit kann über diesen Unterschied den Grad der Belagbildung ermitteln. Insbesondere der Unterschied der Zeitspannen, die zum Abkühlen benötigt werden, eignet sich dazu, Rückschlüsse auf die Belagbildung zu ziehen.

In einer besonders vorteilhaften Ausführung der Erfindung werden die Messungen zur Ermittlung der Belagbildung mit der gleichen Heizstärke durchgeführt wie bei der Referenzmessung. Das bedeutet, dass gleichgültig ob der Sensor belagfrei ist oder sich ein Belag auf dem Sensor gebildet hat, das Medium, das ein Bauteil des Sensors umgibt, mit der gleichen Heizstärke beheizt wird. Hat sich ein Belag um dieses Bauteil gebildet so wirkt dieser isolierend. Die Temperatur steigt dann in dem erwärmten Bereich stärker an als wenn das Bauteil nicht von einem Belag umgeben wäre. Der Unterschied zur Referenzmessung ist besonders groß, wenn das Medium das Bauteil umströmt. In diesem Fall kann die Strömung den Bereich um das Bauteil nicht so stark abkühlen, da der Belag isolierend wirkt. Wird als Bauteil ein Widerstand benutzt so kann als Maß für die Heizstärke die Stromstärke herangezogen werden, die durch das Bauteil fließt. Die Stromstärke bleibt bei dieser Variante immer gleich, egal ob mit oder ohne Belag. Über den Unterschied des Temperaturniveaus, das sich bei einer Messung mit Belag im Vergleich zu einer Messung ohne Belag einstellt, kann die Auswerteeinheit den Grad der Belagbildung bestimmen.

In einer weiteren besonders vorteilhaften Ausführungsform der Erfindung wird das Temperaturniveau, auf das sich das Medium um das Bauteil erwärmt, konstant gehalten. Bei dieser Variante wird die Heizstärke angepasst, die nötig ist, um ein bestimmtes Temperaturniveau zu erreichen. Beim Einsatz von Widerständen als Bauteile bedeutet dies, dass zur Erreichung des gleichen Temperaturniveaus bei einer Belagbildung um das Bauteil nur eine geringere Stromstärke erforderlich ist als wenn das Bauteil belagfrei ist. Der Unterschied der Stromstärke im Vergleich zur Referenzmessung dient als Maß für den Grad der Belagbildung.

Bei einer besonders günstigen Variante der Erfindung wird die Erwärmung des Mediums um das Bauteil des Sensors und die Erfassung der Temperatur in diesem Bereich mit demselben Bauteil bewerkstelligt. Vorzugsweise wird dazu ein temperaturabhängiger Widerstand eingesetzt, An den Widerstand wird eine Spannung angelegt, so dass ein Strom durch den Widerstand fließt und diesen erwärmt. Bildet sich ein Belag um das Bauteil so steigt die Temperatur an und der Widerstand des Bauteils nimmt zu. Dadurch nimmt die Stromstärke die durch das Bauteil fließt ab. Die Abnahme der Stromstärke kann als Maß für den Grad der Belagbildung herangezogen werden.

Bei der erfindungsgemäßen Ausführungsform beinhaltet der Sensor zusätzlich ein Bauteil, das die Temperatur des Mediums an einer Stelle misst, die vom Sensor nicht erwärmt wird. Dadurch können Messeffekte kompensiert werden, die nicht auf einer Belagbildung beruhen. Um diese Effekte auszuschließen, wird immer der Bezug zur Temperaturmessung mit dem zweiten Bauteil hergestellt. Dadurch wird verhindert, dass Erwärmungsvorgänge, die durch prozessbedingte Vorgänge hervorgerufen werden, die Bestimmung der Belagbildung verfälschen. Vorzugsweise wird als zusätzliches Bauteil ein temperaturabhängiger Widerstand eingesetzt. Steigt die Temperatur im Medium an so nimmt der Widerstand zu. Der Anstieg des Widerstandes kann über eine Spannungsmessung oder über die Messung der Stromstärke, die durch das Bauteil fließt, bestimmt werden. Der Anstieg des Widerstandes ist ein Maß für die Temperatur des Mediums.

Als günstig erweist sich eine Messanordnung bei der das Bauteil, welches das Medium erwärmt und in diesem Bereich die Temperatur misst, mit dem Bauteil, das die Temperatur im Bereich des Mediums misst, der nicht vom Sensor erwärmt wurde, miteinander messtechnisch gekoppelt wird. Dadurch können Verfälschungen durch prozessbedingte Temperaturerhöhungen direkt kompensiert werden.

Bei einer besonders vorteilhaften Variante der Erfindung wird von der Auswerteeinheit bei Überschreitung eines Grenzwertes eines bestimmten Grades der Belagbildung ein Signal abgegeben, wobei es sich als besonders günstig erweist, dass dieses Signal einen Prozess auslöst, der eine Reinigung der Wände bewirkt. Die Verarbeitung des Sensorsignals und die Auslösung des Reinigungsprozesses können über ein Prozessleitsystem erfolgen. Dadurch müssen sich die Betreiber der Produktionsanlagen nicht mehr auf Erfahrungswerte verlassen, sondern haben verlässliche Messdaten, die kontinuierlich erfasst werden. Somit werden Betriebkosten gesenkt, da der Reinigungsprozess erst dann eingeleitet wird, wenn ein bestimmter Grad der Belagbildung überschritten wurde. Weiterhin wird verhindert, dass die Produktqualität durch die Belagbildung negativ beeinflusst wird, weil der Prozess zu lange ohne Reinigung gefahren wurde.

Auch die Dauer des Reinigungsvorgangs kann durch den Einsatz der erfindungsgemäßen Vorrichtung optimiert werden. Während des Reinigungsprozesses wird der Grad der Belagbildung kontinuierlich gemessen. Mit fortschreitender Reinigung nimmt der Belag ab. Der Reinigungsvorgang wird so lange durchgeführt, bis der Belag vollständig entfernt ist, bzw. einen vorgegeben Grenzwert unterschreitet. Dadurch wird verhindert, dass der Reinigungsvorgang unnötig lange durchgeführt wird und sowohl Reinigungsmittel als auch Produktionszeit verschwendet werden. Umgekehrt wird gewährleistet, dass der Reinigungsvorgang erst dann beendet wird, wenn die Rohrleitungen weitgehend belagfrei sind. Dies sichert eine hohe Produktqualität.

Ein besonderer Vorteil der Erfindung besteht darin, dass der Sensor nicht nur zur Bestimmung der Belagbildung sondern zeitgleich zur Durchflussmessung eingesetzt werden kann. Erfindungsgemäß handelt es sich um eine Vorrichtung, die zwei Messverfahren in einer Vorrichtung integrativ vereinigt. Ebenso kann der Sensor zur Messung der Strömungsgeschwindigkeit und der Temperaturmessung verwendet werden.

Weitere Merkmale und Vorteile der Erfindung ergeben sich aus der Beschreibung eines Ausführungsbeispiels anhand von Zeichnungen und aus den Zeichnungen selbst; dabei zeigt:
- Figur 1:: Einsatz der Vorrichtung in einem Rohrstück ohne Belag
- Figur 2:: Einsatz der Vorrichtung in einem Rohrstück mit Belag
- Figur 3a:: Temperatur-Zeit Diagramm mit Belag
- Figur 3b:: Temperatur-Zeit-Diagramm ohne Belag.

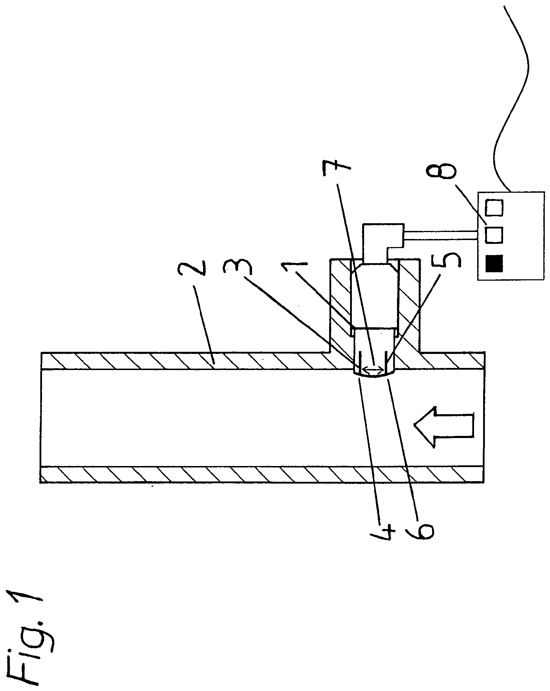

In Figur 1 ist ein Sensor 1 dargestellt, der in eine Wand 2 eines Rohrs integriert ist. Durch das Rohr fließt ein Medium. Der Sensor 1 umfasst ein Bauteil 3, welches erwärmt wird und seine Wärme an das Medium abgibt. Bei dem Bauteil 3 handelt es sich um einen temperaturabhängigen Widerstand, der stiftförmig ausgebildet ist. Die Spitze des Bauteils 3 ragt in das Medium hinein. An das Bauteil 3 wird eine Spannung angelegt, so dass ein Strom durch den Widerstand fließt und das Bauteil 3 aufheizt. An der Stelle, an der das Bauteil 3 Kontakt mit dem Medium hat, erfolgt eine lokale Erwärmung des Mediums im Bereich 4 um die Spitze des Bauteils 3. Im Ausführungsbeispiel wird die Temperatur des Mediums an der Stelle 4 ebenfalls vom Bauteil 3 gemessen. Das Bauteil 3 hat somit eine Doppelfunktion. Es heizt das Medium lokal auf und misst gleichzeitig die Temperatur in diesem Bereich 4.

Der Sensor 1 umfasst ein zweites Bauteil 5, das die Temperatur des Mediums an einer Stelle 6 misst, die nicht vom Sensor 1 erwärmt wurde. Bei dem Bauteil 5 handelt es sich ebenfalls um einen temperaturabhängigen Widerstand, der stiftförmig ausgebildet ist und mit seiner Spitze in das Medium hineinragt. Durch die Messung der Temperatur an einer Stelle 6, die nicht vom Sensor 1 aufgeheizt wurde, können Effekte herausgerechnet werden, die auf eine allgemeine Erwärmung des Mediums aufgrund von variablen Prozessbedingungen zurückzuführen sind und nicht auf einer Erwärmung durch den Sensor 1 beruhen.

In Figur 1 ist eine besonders vorteilhafte Ausführungsform der Erfindung dargestellt, bei der die Bauteile 3 und 5 nebeneinander angeordnet sind. Die Bauteile 3 und 5 sind als Stifte ausgebildet, die parallel nebeneinander liegen, wobei beide Stifte mit einem Abstand 7 zueinander angeordnet sind.

Figur 1 zeigt die Auswerteeinheit 8 an die der Sensor 1 seine Signale weiterleitet und mit Hilfe derer der Sensor 1 angesteuert wird. Die Auswerteeinheit 8 dient als Stromversorgung für den Sensor.

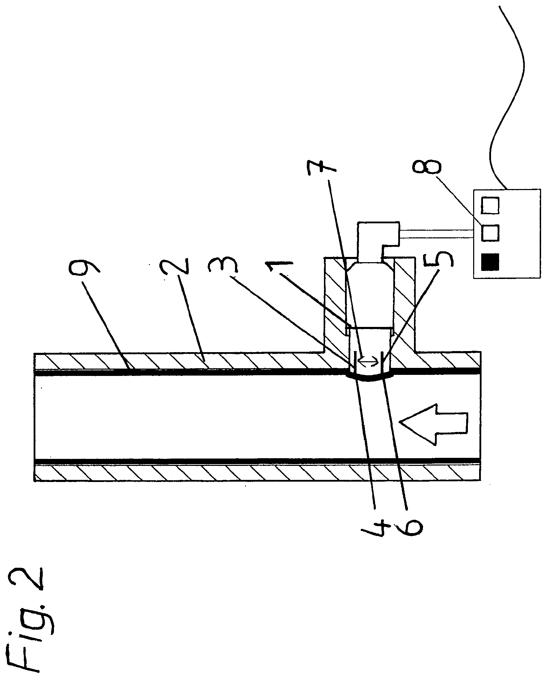

Figur 2 unterscheidet sich von Figur 1 lediglich dadurch, dass sich ein Belag 9 auf der Wand 2 der Rohrleitung gebildet hat. Das Bauteil 3 des Sensors 1 wird elektrisch aufgeheizt. An der Stelle an der das Bauteil 3 Kontakt mit dem Medium hat ist das Bauteil 3 mit Belag 9 bedeckt. Der Belag 9 wirkt isolierend. Er schirmt die Strömung des Mediums um die Spitze des Bauteils 3 ab. Durch die isolierende Wirkung des Belags 9 stellt sich im Bereich 4 ein höheres Temperaturniveau ein. Auch die Zeitspanne, die benötigt wird bis sich ein konstantes Temperaturniveau einstellt, unterscheidet sich zu den Messungen ohne Belag 9.

Die Auswerteeinheit 8 bestimmt durch einen Vergleich der Messdaten mit Belagbildung mit den Messdaten ohne Belagbildung, die als Referenzdaten hergezogen werden, den Grad der Belagbildung auf dem Sensor. Der Grad der Belagbildung auf dem Sensor kann als Maß für den Grad der Belagbildung auf den Wänden 2 der Rohrleitung herangezogen werden.

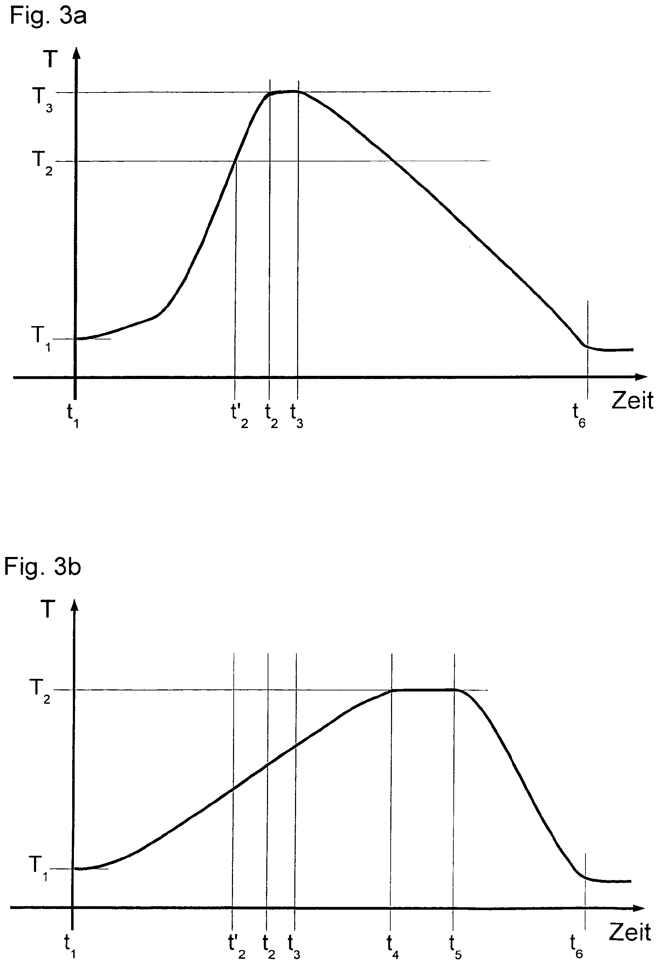

In den Figuren 3 a und 3 b ist der Verlauf der mit Bauteil 3 gemessenen Temperatur im Bereich 4 des Mediums in Abhängigkeit der Zeit dargestellt. Figur 3 a zeigt den Verlauf mit Belag. Figur 3b zeigt den Verlauf ohne Belag. Zu einem Zeitpunkt t₁ wird am Bauteil 3 des Sensors 1 schlagartig eine Spannung angelegt. Zu bestimmen Zeitpunkten, t₅, beim belagfreien Betrieb bzw. t₃, beim Betrieb mit Belag, wird die Spannung abgeschaltet. Als besonders günstig erweist es sich, das Anschalten und Abschalten der Spannung in regelmäßigen Zyklen zu wiederholen. Bei diesem Pulsbetrieb werden bei jedem Zyklus die Messdaten erfasst. Es erweist sich als vorteilhaft, bei der Auswertung mit den Mittelwerten der Messdaten von mehreren Zyklen zu rechnen.

Bei dem Bauteil 3 handelt es sich um einen temperaturabhängigen Widerstand. Sobald elektrischer Strom durch das Bauteil 3 fließt heizt sich das Bauteil 3 auf. Die Diagramme 3 a und 3 b zeigen die Verläufe der Temperatur im Bereich 4 des Mediums, das sich unmittelbar um die Spitze des Bauteils 3 befindet.

Figur 3b zeigt, dass bei einem belagfreien Sensor eine Zeitspanne t₄ - t₁ benötigt wird bis sich ein konstantes Temperaturniveau T₂ einstellt. Die Temperatur steigt von der Temperatur T₁ des Mediums auf einen Wert T₂ während dieser Phase an. Zu einem Zeitpunkt t₅ wird die Spannung am Bauteil 3 ausgeschaltet. Die Temperatur nimmt ab, bis sie zu einem Zeitpunkt t₆ wieder ein konstantes Temperaturniveau T₁ erreicht.

Figur 3 a zeigt, dass bei einem Sensor mit Belag eine Zeitspanne t₂ - t₁ benötigt wird, bis sich ein konstantes Temperaturniveau T₃ einstellt. Das Temperaturniveau T₃ bei einer Messung mit Belag liegt über dem Temperaturniveau T₂ ohne Belag. Die Zeitspanne t₂ - t₁, die bei einer Messung mit Belag benötigt wird bis sich eine konstante Temperatur einstellt, ist kleiner als die Zeitspanne t₄ - t₁, ohne Belag. Zu einem Zeitpunkt t₃ wird die Spannung am Bauteil 3 ausgeschaltet. Die Temperatur nimmt ab bis sie zu einem Zeitpunkt t₆ wieder ein konstantes Temperaturniveau T₁ erreicht. Die Zeitspanne t₆ - t₃, die bei einer Messung mit Belag benötigt wird bis sich eine konstante Temperatur einstellt, ist deutlich größer als die Zeitspanne t₆ - t₅, ohne Belag.

Die Auswerteeinheit 8 kann auf unterschiedliche Weise den Grad der Belagbildung bestimmen.
Eine Möglichkeit besteht in einem Vergleich der Zeitspannen, die zum Abkühlen benötigt werden, wobei sich die Zeitspanne t₆ - t₃, mit Belag, von der Zeitspanne t₆ - t₅, ohne Belag, umso deutlicher unterscheidet je stärker die Belagbildung fortgeschritten ist.

Eine zweite Möglichkeit besteht in einem Vergleich der Zeitspannen, die zum Aufheizen benötigt werden, wobei sich die Zeitspanne t₂ - t₁, mit Belag, von der Zeitspanne t₄ - t₁, ohne Belag, umso deutlicher unterscheidet je stärker die Belagbildung fortgeschritten ist.

Eine dritte Möglichkeit besteht in einem Vergleich der Zeitspannen, die zum Aufheizen bis zu der Temperatur T₂, die sich als konstantes Niveau bei einer Messung ohne Belag einstellt, benötigt werden, wobei sich die Zeitspanne t₂'- t₁, mit Belag, von der Zeitspanne t₄ - t₁, ohne Belag, umso deutlicher unterscheidet je stärker die Belagbildung fortgeschritten ist.

Eine vierte Möglichkeit besteht in einem Vergleich der Temperaturniveaus, die sich nach einer Beheizung des Bauteils 3 einstellen, wobei sich das Temperaturniveau T₃, mit Belag, von dem Temperaturniveau T₂, ohne Belag, umso deutlicher unterscheidet je stärker die Belagbildung fortgeschritten ist.

## Patentansprüche

1. Vorrichtung zum Integrieren in oder auf einer Wand von Anlagenteilen zur Detektion von Belägen (9) auf Mantelinnenflächen der Wände (2), die von einem Medium aus dem sich die Beläge niederschlagen, bedeckt sind,
mit einem aus mehreren Bauteilen zusammengesetzten und sich bündig in die Mantelinnenflächen der Wand (2) einfügenden Sensor (1), und
einer Auswerteeinheit (8), an die der Sensor (1) seine Signale weiterleitet, die durch einen Vergleich mit Referenzdaten den Grad der Belagbildung ermittelt, wobei der Sensor (1) zwei Bauteile (3, 5) umfasst, bei denen es sich um zwei temperaturabhängige Widerstände handelt, die stiftförmig ausgebildet sind, parallel nebeneinander und mit einem Abstand (7) zueinander liegen und mit einer Spitze in das Medium ragen können, wobei das erste Bauteil zur lokalen Heizung des Mediums und zur Messung der Temperatur des Mediums im Bereich dieses Bauteils und das zweite Bauteil zur Messung der Temperatur des Mediums an einer Stelle (6), die nicht vom Sensor (1) aufgeheizt wird, dient, und als Referenzdaten Messdaten ohne Belagbildung herangezogen werden.

2. Vorrichtung nach Anspruch 1, **dadurch gekennzeichnet, dass** die Auswerteeinheit (8) dazu geeignet ist, bei Überschreitung eines Grenzwertes des Grades der Belagbildung ein Signal abzugeben.

3. Verfahren zur Detektion von Belägen (9) auf Mantelinnenflächen von Wänden (2) von Anlagenteilen, die von einem Medium, aus dem sich die Beläge niederschlagen, bedeckt sind, wobei ein aus mehreren Bauteilen zusammengesetzter und sich bündig in die Mantelinnenflächen der Wand (2) einfügender Sensor (1) bereitgestellt wird und eine Auswerteeinheit (8) bereitgestellt wird, an die der Sensor (1) seine Signale weiterleitet, die durch einen Vergleich mit Referenzdaten den Grad der Belagbildung ermittelt, wobei der Sensor (1) zwei Bauteile (3, 5) umfasst, bei denen es sich um zwei temperaturabhängige Widerstände handelt, die stiftförmig ausgebildet sind, parallel nebeneinander und mit einem Abstand (7) zueinander liegen und mit einer Spitze in das Medium ragen, wobei das erste Bauteil das Medium lokal aufheizt und die Temperatur des Mediums im Bereich dieses Bauteils misst und das zweite Bauteil die Temperatur des Mediums an einer Stelle (6), die nicht vom Sensor (1) aufgeheizt wird, misst, und als Referenzdaten Messdaten ohne Belagbildung herangezogen werden.

4. Verfahren nach Anspruch 3, **dadurch gekennzeichnet, dass** die Auswerteeinheit (8) bei Überschreitung eines Grenzwertes des Grades der Belagbildung ein Signal abgibt.

5. Verfahren nach einem der Ansprüche 3 oder 4, **dadurch gekennzeichnet, dass** das Signal einen Prozess auslöst, der eine Reinigung der Wände (2) bewirkt.

6. Verfahren nach einem der Ansprüche 3 bis 5, **dadurch gekennzeichnet, dass** der Sensor (1) neben der Ermittlung der Belagbildung zeitgleich zur Durchflussmessung, zur Temperaturmessung oder zur Messung der Strömungsgeschwindigkeit eingesetzt wird.

## Claims

1. Apparatus for integrating, in or on a wall, system parts for detecting deposits (9) on lateral inner surfaces of the walls (2) which are covered by a medium from which the deposits are deposited, having a sensor (1) which is composed of a plurality of components and is inserted into the lateral inner surfaces of the wall (2) in a flush manner, and
an evaluation unit (8), to which the sensor (1) forwards its signals and which determines the degree of deposit formation by means of a comparison with reference data,
wherein the sensor (1) comprises two components (3, 5) which are two temperature-dependent resistors which are in the form of pins, are parallel next to one another and are at a distance (7) from one another and can project into the medium by way of a tip,
wherein the first component is used to locally heat the medium and to measure the temperature of the medium in the region of this component, and the second component is used to measure the temperature of the medium at a location (6) which is not heated by the sensor (1), and measurement data without deposit formation are used as reference data.

2. Apparatus according to Claim 1, **characterized in that** the evaluation unit (8) is suitable for
emitting a signal if a limit value of the degree of deposit formation is exceeded.

3. Method for detecting deposits (9) on lateral inner surfaces of walls (2) of system parts which are covered by a medium from which the deposits are deposited, wherein a sensor (1) which is composed of a plurality of components and is inserted into the lateral inner surfaces of the wall (2) in a flush manner is provided, and an evaluation unit (8) is provided, to which the sensor (1) forwards its signals and which determines the degree of deposit formation by means of a comparison with reference data,
wherein the sensor (1) comprises two components (3, 5) which are two temperature-dependent resistors which are in the form of pins, are parallel next to one another and are at a distance (7) from one another and can project into the medium by way of a tip, wherein the first component locally heats the medium and measures the temperature of the medium in the region of this component, and the second component measures the temperature of the medium at a location (6) which is not heated by the sensor (1), and measurement data without deposit formation are used as reference data.

4. Method according to Claim 3, **characterized in that** the evaluation unit (8) emits a signal if a limit value of the degree of deposit formation is exceeded.

5. Method according to either of Claims 3 and 4, **characterized in that** the signal triggers a process which causes cleaning of the walls (2).

6. Method according to one of Claims 3 to 5, **characterized in that**, in addition to determining the deposit formation, the sensor (1) is simultaneously used to measure the flow rate, to measure the temperature or to measure the flow velocity.

## Revendications

1. Dispositif pour intégrer dans ou sur une paroi des composants d'installations pour la détection de dépôts (9) sur des surfaces intérieures de revêtement (2) qui sont recouvertes d'un fluide à partir duquel les dépôts sont formés, comportant
un capteur (1) qui est composé de plusieurs composants et qui est inséré affleurant dans les surfaces intérieures de revêtement de la paroi (2), et
une unité d'analyse (8) à laquelle le capteur (1) transmet ses signaux et qui détermine le degré de formation de dépôts par une comparaison avec des données de référence,
dans lequel le capteur (1) comprend deux composants (3, 5), qui sont deux résistances dépendant de la température et sont réalisées sous forme de broches, agencées parallèlement l'une à l'autre et séparées d'une distance (7) l'une de l'autre et pouvant faire saillie en formant une pointe dans le fluide,
dans lequel le premier composant est utilisé pour réchauffer localement le fluide et pour mesurer la température du fluide dans la zone dudit composant et le second composant est utilisé pour mesurer la température du fluide en un point (6) qui n'est pas réchauffé par le capteur (1), et des données de mesure sans formation de dépôts sont utilisées en tant que données de référence.

2. Dispositif selon la revendication 1, **caractérisé en ce que** l'unité d'analyse (8) est apte à délivrer un signal lorsqu'une valeur limite du degré de formation de dépôts est dépassée.

3. Procédé de détection de dépôts (9) sur des surfaces intérieures de revêtement de parois (2) de composants d'installations qui sont recouverts d'un fluide à partir duquel les dépôts se forment, dans lequel il est prévu un capteur (1) qui est composé de plusieurs composants et qui est inséré affleurant dans les surfaces intérieures de revêtement de la paroi (2) et une unité d'analyse (8) à laquelle le capteur (1) transmet ses signaux et qui détermine le degré de formation de dépôts par une comparaison avec des données de référence,
dans lequel le capteur (1) comprend deux composants (3, 5), qui sont deux résistances dépendant de la température et sont réalisées sous forme de broches, agencées parallèlement l'une à l'autre et séparées d'une distance (7) l'une de l'autre et faisant saillie en formant une pointe dans le fluide, dans lequel le premier composant réchauffe localement le fluide et mesure la température du fluide dans la zone dudit composant et le second composant mesure la température du fluide en un point (6) qui n'est pas réchauffé par le capteur (1), et des données de mesure sans formation de dépôts sont utilisées en tant que données de référence.

4. Procédé selon la revendication 3, **caractérisé en ce que** l'unité d'analyse (8) délivre un signal lorsqu'une valeur limite du degré de formation de dépôts est dépassée.

5. Procédé selon l'une des revendications 3 ou 4, **caractérisé en ce que** le signal déclenche un processus qui provoque un nettoyage des parois (2).

6. Procédé selon l'une des revendications 3 à 5, **caractérisé en ce que** le capteur (1) est utilisé simultanément, outre la détermination de la formation de dépôts, pour une mesure de débit, une mesure de température ou pour une mesure de la vitesse d'écoulement.
